# FASCICULE DE BREVET EUROPEEN

(11) **EP 0 792 738 B1**
(45) Date de publication et mention de la délivrance du brevet: **19.12.2001**
(21) Numéro de dépôt: 97400437.6
(22) Date de dépôt: 27.02.1997
(51) Int. Cl.: B29C 70/48, B29C 70/86

(54) **Pièce hybride à haut rapport résistance-masse et procédé de réalisation**
Hybridwerkstoffgegenstand mit grosser "Festigkeit-Massen"-Verhältnis und Verfahren zu seiner Herstellung
Hybrid object having a high "strength-mass" ratio and process for its manufacture

(30) Priorité: 29.02.1996 FR 9602535
(43) Date de publication de la demande: 03.09.1997
(73) Titulaire: Snecma Moteurs, 75015 Paris (FR)
(72) Inventeur: Champenois, Christophe, Jean, Roger, 91450 Soisy S/Seine (FR); Gueldry, Gérard, Michel, Roland, 77240 Vert Saint Denis (FR); David, Laurent, Jean, Pierre, 91250 St Germain les Corbeil (FR); Martinou, Robert, Lucien, 94360 Bry Sur Marne (FR)

(56) Documents cités:
- EP-A- 0 499 052
- DE-A- 2 219 301
- GB-A- 2 082 964
- US-A- 3 762 835
- US-A- 3 775 208
- US-A- 4 006 999
- US-A- 4 455 207
- US-A- 4 460 531

## Description

Dans un premier objet, l'invention se rapporte à une structure de pièce hybride, en particulier mais non exclusivement une biellette à tête rapportée, une aube de turbomachine à bord d'attaque rapporté ou un carter à bossages également rapportés, ces pièces comportant au moins une première partie en matériau composite à matrice de résine organique renforcée par des fibres et au moins une seconde partie rapportée en métal, alliage métallique ou céramique.

Dans un second objet, l'invention se rapporte à un procédé de réalisation de telles pièces.

Les pièces en matériau composite comportant une masse de fibres de renfort, par exemple en carbone ou en carbure de silicium SiC, noyées dans une matrice de résine organique durcie par polymérisation, sont appréciées dans l'industrie et notamment dans l'aéronautique pour leur haut rapport résistance/masse comparativement à ces mêmes pièces réalisées entièrement en métal. Dans les pièces les plus performantes, les fibres de renfort sont constituées en préformes préalablement à leur imprégnation en résine. Une préforme est un assemblage de nappes de tissu, le tissu étant tissé avec les fibres devant constituer le renfort, les nappes de tissu étant découpées et assemblées entre elles pour constituer au moins en partie la forme de la pièce à réaliser, et en occuper ainsi au moins en partie le volume. La préforme peut aussi être réalisée en monotissu, c'est à dire en un tissu constitué de plusieurs nappes de fibres tissées ensemble, un tel tissu offrant une résistance particulièrement élevée à la décohésion entre les nappes de fibres. De telles pièces en matériau composite posent cependant des difficultés résultant de propriétés générales de la résine organique constituant la matrice, à savoir une faible dureté et une faible résistance en température, ces difficultés ne se présentant pas avec les pièces métalliques ou en céramique.

Un premier problème est donc de constituer des pièces en matériau composite à matrice organique renforcée par des fibres dont les parties ainsi sollicitées et pouvant prendre des formes très diverses seraient en métal, alliage métallique ou céramique adaptée à cette sollicitation et façonnée à la forme requise.

La difficulté réside dans le mode de liaison entre la partie en composite organique et la partie métallique alors que la zone de contact entre ces deux parties est soumise à des concentrations de contraintes :
- d'origine mécanique lorsque la partie métallique fait saillie sur la partie composite et est soumise à des efforts tendant à l'arracher,
- d'origine mécanique encore du fait des modules d'élasticité ou modules d'Young différents,
- d'origine thermique du fait des coefficients de dilatation en température très différents.

Ces phénomènes sont aggravés lorsque la partie métallique est rigide, donc épaisse, ou lorsqu'au moins une dimension de la zone de contact est importante, ce qui nécessite de renforcer la liaison par des moyens mécaniques supplémentaires tels vissage, rivetage, coutures etc ...

Un second problème est en conséquence d'assurer une liaison très résistante entre les parties de la pièce en composite à matrice organique et les parties en métal, alliage métallique ou céramique.

La faible résistance de la résine organique à l'abrasion et aux impacts de corps étrangers pose problème notamment dans le cas des hélices pour aéronefs. Ce même problème se pose aussi pour les aubes de turbomoteur pour aéronef, surtout les aubes dites de soufflante situées tout à l'avant des turbomoteurs. En effet, de telles aubes tournant jusqu'à 3000 tours par minute et pouvant atteindre une hauteur de 1200 mm avec une épaisseur inférieure à 30 mm sont particulièrement exposées à l'abrasion du sable pénétrant dans le moteur ou aux chocs de corps étrangers lourds comme les oiseaux.

Pour remédier à cela, on peut recouvrir le bord d'attaque de l'aube par un revêtement métallique, mais avec le problème de liaison précédemment décrit. Le brevet DE 4 411 670 décrit une aube comportant un bord d'attaque dont la liaison au reste de la pale est renforcée par vis et coutures.

Cette solution nécessitant des opérations de fabrication supplémentaires reste toutefois d'une résistance limitée, car un nombre excessif de coutures affaiblirait la pale par multiplication des perforations à travers cette pale. Le bord d'attaque est donc mince et souple ce qui ne lui permet pas de résister correctement aux chocs d'objets lourds tels les oiseaux.

La faible résistance des matériaux composites à matrice organique aux compressions localisées, par exemple du type poinçonnage, provient du fait que les fibres de renfort sont sans effet dans ce type de contrainte alors qu'elles sont très efficaces dans les sollicitations en traction. Ce problème se pose pour les points de fixation par rivetage ou boulonnage des pièces, en composite, par exemple des carters, des couvercles ou des cônes d'entrée d'air de turbomoteurs pour aéronefs. Le problème n'est que partiellement résolu par l'utilisation de rivets ou de boulons à tête de vis et écrou large car cette largeur reste limitée et il subsiste des concentrations de contraintes importantes aux points de fixation nécessitant une force de serrage réduite et une augmentation du nombre de points de fixation.

On connaît par le brevet US 4.006.999 une structure d'aube de turbomachine en matériau composite fibre-résine comportant un bord d'attaque métallique recouvrant largement les flancs intrados et extrados de l'aube. La partie composite de l'aube est elle-même composée de deux parties enserrant des grillages au voisinage de la surface moyenne de l'aube. Ces grillages débordent vers l'avant et sont pris dans le métal composant le bord d'attaque, afin de renforcer la liaison entre le bord d'attaque et le reste de l'aube en composite. L'efficacité d'une telle solution reste cependant limitée, car cette liaison s'effectue essentiellement au centre du bord d'attaque, la liaison des flancs du bord d'attaque avec le reste de l'aube en composite s'effectuant seulement par adhérence. par ailleurs, le procédé permettant de réaliser et d'assembler le bord d'attaque au reste de l'aube n'apparait pas clairement.

La faible résistance en température des résines organiques entraîne une limitation de l'emploi des pièces en composites élaborées à partir de ces résines. On connaît un procédé de protection thermique de pièces métalliques consistant à réaliser à la surface de ces pièces un bouclier en céramique thermiquement isolante par projection plasma. L'application de ce procédé aux pièces en composite à matrice organique pose cependant deux difficultés :

D'abord il n'est pas applicable aux pièces de dimension conséquente du fait de la grande différente entre la température de solidification de la céramique fondue et la température ambiante et de la cassure de type vitreux de la céramique. En effet au refroidissement, la céramique ayant un coefficient de dilatation thermique plus important se contractera plus vite avec un risque élevé de fissuration de la céramique, une forte compression de la pièce en composite et une concentration de contraintes importante entre la céramique et la pièce tendant à provoquer le décollement de la couche de céramique.

Ensuite, la chaleur dégagée par la projection par plasma de céramique en fusion sur la pièce en composite va provoquer une forte dégradation de la résine réduisant la résistance de la pièce. La chaleur dégagée va provoquer aussi la destruction par pyrolyse de la résine dans le voisinage de la surface de la pièce, ce qui réduit la résistance de la liaison entre la couche de céramique et la partie composite de la pièce.

On connaît un procédé de protection de pièces en matériau composite fibre de renfort + résine organique consistant à projeter par plasma sur la pièce une couche de métal ou d'alliage métallique en fusion. On retrouve dans ce procédé les inconvénients précédemment décrits. Bien que le risque de fissuration puisse être réduite en utilisant un métal malléable, ce procédé reste limité aux revêtements de protection en couche mince pour des pièces peu sollicitées.

On connaît par le brevet US 3,775,208 une pièce moulée en résine synthétique renforcée de fibre et recouverte d'un film de protection contre les impacts, le film pouvant être métallique ou en céramique, la pièce comportant sous le film une couche intermédiaire en matériau résistant à des températures radhérence du film étant renforcée par la présence d'une couche intermédiaire en matériau résistant à des températures supérieures à la température de polymérisation de la résine. Le mode de réalisation proposé est une couche intermédiaire en résine renforcée de fibre, cette fibre pouvant se présenter sous la forme d'une couche de tissus laminée avec la résine. La couche intermédiaire est appliquée sur la pièce et le film de protection est lui même déposé à la flamme sur la couche intermédiaire. Cette technologie permet effectivement d'améliorer l'adhérence du film de protection sur la pièce. Elle présente cependant l'inconvénient de n'offrir qu'une adhérence faible car elle est limitée par :
- soit l'adhérence entre la résine de la couche intermédiaire et celle de la pièce,
- soit l'adhérence du métal ou de la céramique du film avec la résine de la couche intermédiaire,
la résistance de la résine étant intrinsèquement faible.

L'invention propose une pièce hybride à haute résistance comportant une première partie, ou partie tendre, en matériau composite constituée d'une matrice de résine organique renforcée par des fibres et d'au moins une seconde partie, ou partie dure, en matériau du groupe métal, alliage métallique ou céramique, la pièce hybride comportant également une couche de transition qui sépare entièrement la partie tendre de la partie dure de la pièce, cette couche de transition étant en matériau composite constitué de fibres de renfort et d'une matrice en matériau soudable avec la partie dure.

Selon l'invention, cette pièce est remarquable en ce que la partie dure est susceptible de prendre de grandes dimensions et d'avoir au moins à un endroit une dimension d dans une direction quelconque au moins égale à 8 mm, avec une liaison très robuste entre la partie tendre et la partie dure, et en ce que les fibres de la couche de transition sont le prolongement des fibres de la partie tendre, lesdites fibres coupant au moins à la périphérie de la couche de transition la surface séparant ladite douche de transition de la partie tendre de la pièce.

On comprend qu'une liaison particulièrement résistante est ainsi obtenu grâce à une double continuité, soit la continuité de la matrice de la couche de transition avec la matière de la partie dure, ainsi que la continuité des fibres de renfort de cette couche de transition avec celles de la partie tendre.

On comprend aussi que cette double continuité au moins à la périphérie de la couche de transition, permet d'obtenir une grande résistance à l'arrachement de la partie dure sur la partie tendre, cette résistance à l'arrachement étant encore plus appréciable lorsque la partie dure forme une excroissance sur la partie tendre.

La liaison est encore meilleure lorsque cette double continuité s'étend sur toute la surface de la couche de transition.

Avantageusement, la matrice de la couche intermédiaire est en matériau du groupe métal, alliage métallique ou céramique.

L'épaisseur de la couche de transition ainsi que la profondeur de pénétration des fibres de la couche de transition dans la partie tendre ne sont pas critiques. Il suffit que les fibres soient suffisamment enrobées par la matrice de la couche de transition et la matrice de la partie tendre de la pièce, afin de retenir lesdites fibres par lesdites matrices. Ceci permet de supprimer la cause de décohésion de la partie tendre avec la partie dure par rupture des matrices et par décohésion entre fibre et matrice dans le voisinage de la surface séparant la couche de transition de la partie tendre.

Avantageusement, la matrice de la partie tendre et la matrice de la couche de transition arriveront en contact mutuel afin de bien enrober la fibre dans le voisinage de la surface séparant la partie tendre de la pièce et la couche de transition, et par répercussion de ne pas affaiblir la liaison dans cette zone très sollicitée.

Dans un mode de réalisation avantageux, les fibres traversent la surface séparant la partie tendre de la couche de transition en formant un angle compris entre 15 et 75° avec ladite surface, afin d'augmenter la capacité de la fibre à s'opposer au décollement de la partie tendre et de la couche de transition.

Dans un mode de réalisation avantageux n'excluant pas le mode précédent, les fibres de renfort forment chacune un coude dans la couche de transition et se prolongent de part et d'autre du coude dans la partie tendre, afin d'améliorer la saisie de la fibre par la matrice de la couche de transition, de réduire l'épaisseur de ladite couche de transition et d'augmenter la résistance de la liaison entre ladite partie tendre de la pièce et ladite couche de transition.

Dans un mode de réalisation préféré, les fibres de renfort seront celles de nappes de tissu occupant le volume de la partie tendre au moins dans le voisinage de la couche de transition, ces nappes de tissu se prolongeant dans la couche de transition et en occupant le volume. Ceci a pour effet de faire traverser par un grand nombre de fibre la surface entre la couche de transition et la partie tendre, ces fibres étant bien réparties sur ladite surface et se croisant à ce niveau en tant que fils de trame et fils de chaîne, ce qui renforce la liaison entre la partie tendre et la partie dure de la pièce. Une telle structure permet aussi très simplement de disposer des fibres sur toute la surface délimitant la couche de transition de la partie tendre, et d'augmenter ainsi simplement la résistance de liaison entre la partie dure et la partie tendre de la pièce.

Avantageusement, les nappes de tissus seront celles d'un monotissu, afin d'augmenter le nombre de fibres traversant la surface entre la couche de transition et la partie tendre, ce qui renforce encore la liaison entre la partie tendre et la partie dure de la pièce.

L'invention ne saurait être confondue avec la pièce divulguée par le brevet US 4.006.999 précité. En effet, dans la présente invention, la couche de transition sépare intégralement la partie dure de la partie tendre, les fibres de renfort traversant au moins à la périphérie la surface entre la couche de transition et la partie tendre, ces fiches étant enrobées par les matrices de la couche de transition et de la partie tendre, ce qui offre une liaison élevée entre ladite partie dure et ladite partie tendre. Dans le brevet US 4.006.999 au contraire, la couche de transition telle que définie dans la présente invention est localisée au centre de la partie dure, et les fibres qui s'en écartent sont simplement tangentes à la partie dure et à la partie tendre. Cette disposition ne permet en conséquence pas d'obtenir une liaison entre la partie dure et la partie tendre qui soit comparable à celle qui est obtenue avec la présente invention.
L'invention propose aussi un procédé de réalisation de telles pièces mettant en oeuvre le procédé bien connu RTM (resin transfer molding) et comportant notamment les opérations suivantes :
a) réalisation d'une préforme de fibre à la forme de la partie tendre de la pièce associée à la couche de transition,
b) constitution de la couche de transition par projection par plasma d'un matériau fondu soudable avec le matériau de la seconde partie,
c) constitution de la seconde partie de la pièce notamment sous la forme d'un brut, sur la couche de transition,
d) disposition de l'ensemble première partie + couche de transition + seconde partie dans un moule,
e) injection et polymérisation de la résine dans la préforme constituant la première partie.

Selon la forme à obtenir, la constitution de la seconde partie peut s'effectuer :
f) par changement de la matière de cette seconde partie à la flamme, à l'arc électrique ou par projection plasma,
g) par usinage de cette seconde partie et soudage sur la couche de transition.

Après polymérisation de la résine, la seconde partie fera en général l'objet d'un usinage complémentaire et d'une finition.

Avantageusement le moule comportera une cavité entourant la seconde partie avec un jeu suffisant pour qu'il n'y ait pas contact entre les parois du moule et la cavité. Préalablement à l'injection de résine, on comblera l'espace laissé libre entre la seconde partie et les parois de la cavité par un élastomère. Cette disposition présente deux avantages :
- élimination du risque de déformer la pièce par poussée d'une paroi du moule sur la deuxième partie de la pièce encore imprécise à ce stade du procédé,
- économie de résine, l'élastomère empêchant la résine très liquide de surmouler la seconde partie.

Dans une forme de réalisation particulière de l'invention, la pièce hybride est une aube de turbomachine et plus particulièrement mais non exclusivement une aube de soufflante de turbomoteur pour aéronef, une telle aube comportant une pale en matériau composite à matrice organique et un bord d'attaque rapporté en alliage métallique.

Avantageusement, l'aube aura une préforme de fibres constituée par un empilement de nappes de tissus parallèlement à la surface moyenne de la pale, le bord amont de chaque nappe arrivant jusque dans la couche de transition. Avantageusement aussi, les bords avant des nappes constitueront une protubérance ou bulbe pénétrant à l'intérieur du bord d'attaque, afin d'augmenter la surface de la couche de transition, et par répercussion la solidité de la liaison entre la première partie de la pièce et la couche de transition.

Avantageusement aussi, la préforme de fibre sera en monotissu, les fils de chaîne reliant les nappes entre elles formant des coudes dans la couche de transition, et améliorant la saisie de la fibre par la matrice de la couche de transition.

Dans le cas d'une aube de soufflante de turbomoteur pour aéronef, la fibre est habituellement en carbone haute résistance, en carbure de silicium SiC ou autre matériau de propriété équivalente, et le bord d'attaque en alliage de titane TA6V. Avec une épaisseur 1 de 8 à 10 mm prise suivant une direction allant vers l'aval de l'aube, ce bord d'attaque présentera une rigidité améliorée par rapport à celui du brevet DE 4 411 679 précédemment cité. Cette rigidité sera améliorée sans inconvénient en portant cette épaisseur au moins à 20 mm, ce qui rend l'aube particulièrement résistante aux chocs de corps étrangers lourds, malgré sa grande légèreté par rapport aux aubes entièrement métallique.

Dans une autre forme de réalisation de l'invention, la première partie est une paroi par exemple d'un carter, d'un couvercle ou d'un cône d'entrée d'air, et la seconde partie un bossage ou une pluralité de bossages rapportés sur ladite paroi.

Dans une troisième forme de réalisation de l'invention, la seconde partie est un bouclier thermique en céramique appliqué par exemple sur la paroi intérieure d'un carter de turbomachine.

La présente invention ne saurait être assimilée à un nouvel emploi du procédé de traitement de surface par projection par plasma de métal ou d'alliage métallique fondu sur une pièce en matériau composite à matrice organique, ou à une variante de ce procédé, ainsi qu'aux articles ainsi obtenus. En effet:
a) la partie métallique ou en céramique n'est pas un simple revêtement mais une pièce proéminente de forme variable et est soudée à la matrice de la couche de transition pour interpénétrer avec la fibre de la première partie,
b) cette partie métallique ou céramique est obtenue par chargement de matière ou soudage de pièce réalisée antérieurement à l'imprégnation de la préforme de fibre par la résine.

Le résultat obtenu est des pièces hybrides dont la partie métallique ou en céramique peut faire fortement saillie sur la partie en composite à matrice organique avec :
- une très forte liaison de type soudage entre les deux parties,
- une parfaite santé matière de la partie en composite organique.

L'invention est aussi particulièrement avantageuse dans le cas des pièces de grandes dimensions, car pendant le refroidissement de la seconde partie, les fibres de la première partie qui ne sont pas immobilisées par la matrice de résine suivent sans tensions internes les contractions de la seconde partie. La polymérisation de la résine ne générera ensuite que de faibles tensions internes, car elle s'effectue à des températures allant de 100°C à 300°C, donc très inférieures aux températures de fusion du matériau de la seconde partie métallique ou en céramique, soit 1300°C à 1700°C.

Pour les mêmes raisons, l'invention autorise des parties en céramique de grande dimension sans risque de fissuration par rupture vitreuse de cette céramique pendant son refroidissement.

La présente invention ne saurait être limitée à une seconde partie unique, le terme "seconde partie" pouvant au contraire désigner une pluralité de pièces distinctes. Ce peut être le cas par exemple d'une aube dont sont renforcés par chargement de métal ou d'alliage métallique le bord d'attaque comme précédemment, mais aussi les flancs du pied par lequel l'aube est tenue et le bord de fuite. Ce peut être le cas aussi par exemple d'un carter ou d'un couvercle comportant une pluralité de bossages.

L'invention sera mieux comprise et les avantages qu'elle procure apparaîtront plus clairement au vu d'un exemple détaillé de réalisation et des figures annexées.

La figure 1 illustre un barreau en matériau composite à matrice organique dont une extrémité métallique est rapportée.

La figure 2 illustre la structure d'un monotissu dans la couche de transition et au voisinage de celle-ci.

La figure 3 illustre le moulage du barreau de la figure 1.

La figure 4 illustre ce même barreau dont la partie rapportée est usinée séparément et soudée à la couche de transition.

La figure 5 illustre la partie avant d'une aube conforme à l'invention.

La figure 6 illustre le façonnage par projection plasma du bord d'attaque de l'aube.

La figure 7 illustre le moulage de l'aube.

La figure 8 illustre une paroi en composite organique avec un bossage rapporté.

La figure 9 illustre le façonnage de ce bossage rapporté.

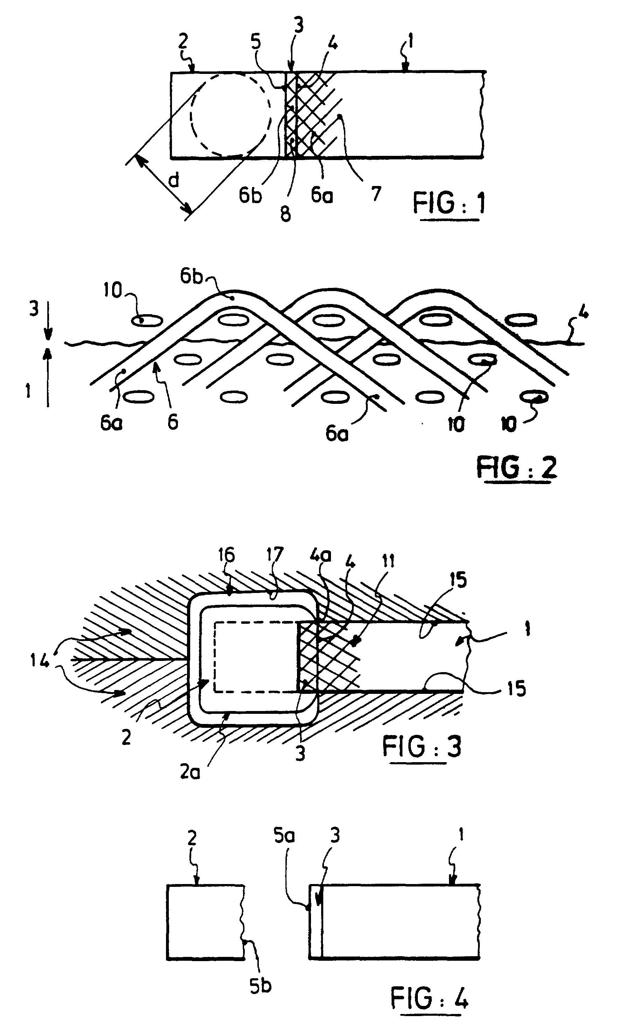

On se reportera en premier lieu à la figure 1. La pièce est un barreau dont la partie 1 est le corps et la partie 2 une extrémité, lesdites parties 1 et 2 étant séparées par une couche de transition 3. On référencera 4 et 5 les surfaces de séparation entre la couche de transition 3 et respectivement les parties 1 et 2. La partie 2 a au moins en un endroit une dimension dans une direction quelconque au moins égale à d = 8 mm et peut faire saillie sur la partie 1. En d'autres termes, une sphère fictive de diamètre d est inscriptible dans la partie 2.

La partie 1 est composée de fibres 6a à haute résistance et capables de supporter une température élevée, par exemple en carbone ou carbure de silicium SiC ou en carbure de bore, les fibres 6a étant noyées dans une matrice 7 de résine organique durcie par polymérisation.

La couche de transition 3 est composée de fibres 6b qui sont les prolongements des fibres 6a, les fibres 6b étant elles-mêmes noyées dans une matrice 8 en matériau soudable avec celui de la partie 2. Ce matériau de la partie 2 peut être en métal, en alliage métallique ou en céramique.

On référencera 6 les fibres dont un segment 6a est dans la partie 1 et un segment 6b dans la partie 2. Afin de bien enserrer les fibres 6 dans le voisinage de la surface de séparation 4, la matrice 7 de la partie 1 arrive jusqu'au contact de la matrice 8 de la couche de transition 3, ce qui empêche les fibres 6 de se retrouver en porte-à-faux et améliore la liaison entre la partie 1 et la couche de transition 3. Le liaison entre la couche de transition 3 et la partie 1 peut être encore améliorée à l'arrachement en donnant aux fibres 6 un angle d'incidence compris entre 15° et 75° par rapport à la surface de séparation 4 lors de leur passage à travers ladite surface 4.

Avantageusement les fibres 6 traverseront la surface de séparation 4 avec un angle d'incidence compris entre 15° et 75°, afin d'augmenter la résistance à l'arrachement de la liaison entre la couche de transition et la partie 1.

On se reportera à la figure 2. Dans une forme de réalisation préférée, les fibres 6 sont incluses dans un monotissu, c'est à dire dans un tissu composé de plusieurs nappes de fils de trame 10 reliées entre elles par les fils 6. Ces fils 6 en contournant les fils de trame 10 les plus à la surface du tissu constituent des coudes 6b à l'intérieur de la couche de transition 3 alors que les extrémités des coudes 6a se prolongent dans la partie 1 à l'intérieur du monotissu. Avec une telle disposition, les fils 6 réalisent un accrochage efficace entre la couche de transition 3 et la partie 1 et renforce de ce fait la liaison entre ladite couche de transition 3 et ladite partie 1.

On se reportera maintenant à la figure 3. Dans une première forme de réalisation de l'invention la pièce est obtenue comme suit :
a) Réalisation d'une préforme de fibres 11 à la forme de la partie 1 augmentée de la couche de transition 3. De telles préformes sont connues de l'homme du métier et peuvent être constituées de nappes de tissus assemblées d'un monotissu et ou simplement de fils ou bandes tissées bobinées sur un noyau,
b) Réalisation de la couche de transition 3 par projection par plasma du matériau en fusion de la partie 2 ou d'un matériau soudable avec celui de la partie 2, soit un métal, un alliage métallique ou une céramique. Des caches non représentés peuvent être disposés contre la préforme 11 jusqu'au pourtour de la surface 4 à constituer, afin de ne pas projeter de la matière en fusion sur le reste de la préforme 11.
c) Réalisation sur la couche de transition ainsi obtenue d'un brut 2a de la partie 2 avec des surépaisseurs suffisantes, par chargement de matière en fusion de la partie 2 déposée goutte à goutte à la flamme ou à l'arc électrique.
d) Disposition de l'ensemble ainsi obtenu, soit préforme 11 + couche de transition 3 + brut 2a dans un moule 14 comportant des parois 15 à la forme de la partie 1 ainsi qu'une cavité 16 entourant le brut 2a avec un jeu suffisant compte tenu des inégalités du brut 2a.
e) Injection d'élastomère entre les parois 17 de la cavité et le brut 2a afin de combler le vide ainsi laissé.
f) Injection de résine liquide selon le procédé RTM (résin transfer molding) dans la préforme 11 et polymérisation pour constituer la partie 1.
g) Démoulage et usinage s'il y a lieu du brut 2a pour constituer la partie 2.

On se reportera maintenant à la figure 4. Dans une autre forme de réalisation de l'invention :
- on réalise l'ensemble partie 1 + couche de transition 3 conformément aux opérations a et b ci-dessus,
- on usine la surface 5a de la couche de transition 3,
- on préusine la partie 2 et notamment une surface 5b de forme complémentaire à la surface 5a,
- on soude la partie 2 sur la couche de transition 3 par brasage des surfaces 5a et 5b, ensembles,
- on termine la pièce conformément aux opérations d, e, f, et g ci-dessus.

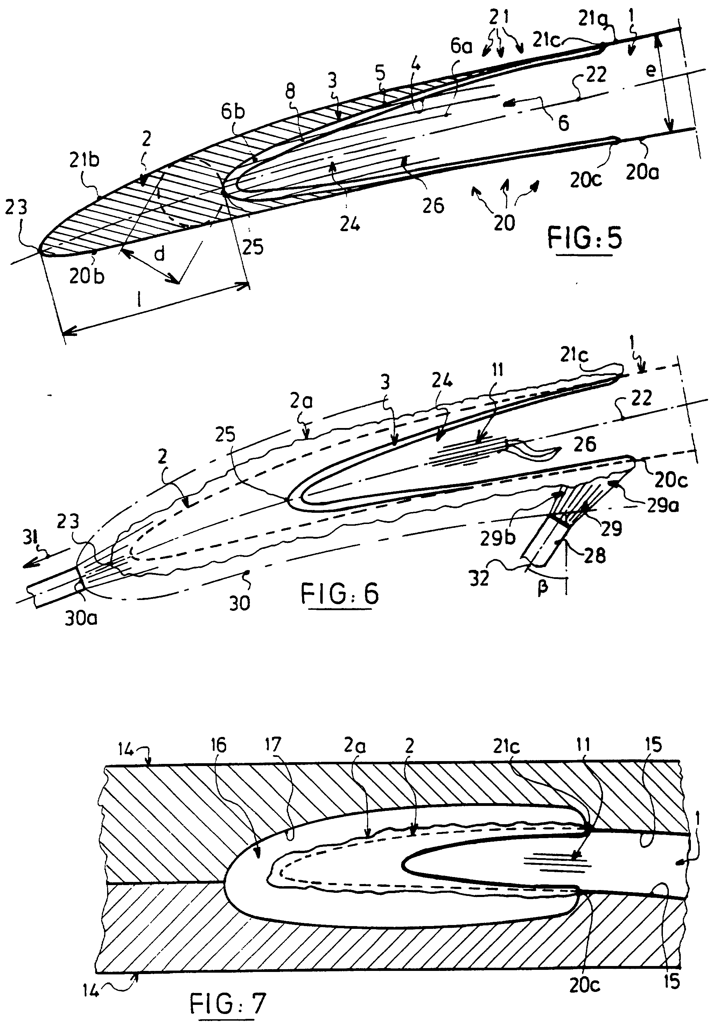

On se reportera maintenant à la figure 5. La pièce est une aube de soufflante de turbomachine comprenant une première partie 1 qui en constitue la pale proprement dite, une seconde partie 2 qui en constitue le bord d'attaque, et une couche de transition 3 entre les parties 1 et 2.

La pale 1 est en matériau composite comportant une matrice 7 de résine organique renforcée par des fibres 6a de carbone haute résistance. L'aube comporte un flanc concave 20 ou intrados et un flanc convexe 21 ou extrados. On référencera 20a et 20b la partie de l'intrados 20 respectivement sur la pale 1 et le bord d'attaque 2, ainsi que 20c la ligne de démarcation entre les parties 20a et 20b dudit intrados 20. On référencera également 21a et 21b la partie de l'extrados 21 respectivement sur la pale 1 et le bord d'attaque 2, ainsi que 21c la ligne de démarcation entre les parties 21a et 21b dudit extrados 21. On référencera aussi 22 la surface moyenne fictive à mi-distance de l'intrados 20 et de l'extrados 21. L'intrados 20 et l'extrados 21 se rejoignent sur la surface moyenne fictive 22 pour constituer la ligne 23 la plus à l'avant du bord d'attaque 2, les lignes 20c et 21c étant elles-mêmes les lignes les plus à l'arrière de ce bord d'attaque 2.

Avantageusement, la pale 1 comporte un bulbe 24 pénétrant largement à l'intérieur du bord d'attaque 2. Cette disposition permet d'augmenter la surface 4 de la couche de transition et d'améliorer ainsi la liaison des parties 1 et 2 notamment à l'arrachement sur un effort perpendiculaire à la surface moyenne 22. On notera 25 l'extrémité à l'avant du bulbe 24.

Dans sa partie la plus massive, c'est à dire juste à l'avant du bulbe 24, le bord d'attaque 2 a une dimension d dans une direction quelconque au moins égale à 8 mm. En d'autres termes, une sphère de diamètre d = 8 mm est inscriptible dans ce bord d'attaque 2. Avantageusement, ce bord d'attaque 2 aura une dimension 1 dans l'axe de l'aube, c'est à dire entre les lignes 23 et 25, au moins égale à l'épaisseur e de l'aube, pour une meilleure rigidité dudit bord d'attaque 2.

Avantageusement aussi les fibres de renfort 6 seront celles de nappes de tissu 26 disposées parallèlement à la surface moyenne 22. Cette disposition est plus économique à réaliser et permet de faire déboucher un maximum de fibres 6b dans la couche de transition 3 pour une liaison résistante de la couche de transition 3 sur la pale 1.

Il s'agit là d'un avantage de l'invention sur l'art antérieur. En effet, du fait que les bords des nappes 26 de tissu qui affleurent à la surface de l'aube sont très vulnérables aux impacts de corps étrangers, l'usage est de disposer ces nappes 26 parallèlement aux flancs intrados 20 et extrados 21 de façon à amener les bords des nappes à l'intérieur ou à l'arrière de l'aube. Dans la présente invention au contraire le bord d'attaque 3 très rigide face aux sollicitations de l'avant vers l'arrière et enveloppant largement l'avant de la pale 1 protège efficacement les bords des nappes 26.

L'utilisation d'un monotissu dans ce deuxième exemple présente les avantages déjà décrits dans le premier exemple.

On se reportera maintenant à la figure 6. L'aube est réalisée comme suit : une préforme de fibre 11 à la forme de la pale 1 de l'aube augmentée du bulbe 24 et de la couche de transition 3 est constituée de nappes de tissu 26 parallèles à la surface moyenne 22. Ces nappes de tissu peuvent être découpées séparément à la forme appropriée, empilées et cousues. Avantageusement, elles seront partie intégrante d'un monotissu. La couche de transition 3 est ensuite constituée par projection plasma de matière sur le bulbe 24 jusqu'aux lignes 20c et 21c. Un brut 2a du bord d'attaque 2 est ensuite façonné par apport de matière. Dans un mode de réalisation préféré, cette matière est déposée avec une torche plasma 28 projetant un faisceau conique 29 de gouttelettes de matière en fusion du brut 2a sur la couche de transition 3. La torche 28 est déplacée dans le plan de la figure 6 suivant une trajectoire 30 enveloppant initialement le bulbe 24 et s'éloignant progressivement de ce bulbe 24 selon la direction 31 orientée selon l'avant du bord d'attaque 2 au fur et à mesure de la formation du brut 2a. On référencera 30a l'avant de la trajectoire 30, c'est à dire l'intersection de ladite trajectoire 30 avec la surface moyenne 22 à l'avant de l'aube. Cette trajectoire 30 est combinée avec une trajectoire le long du bord d'attaque 2, c'est à dire perpendiculairement au plan de la figure 6.

Dans un mode de réalisation préféré, on commencera à déposer à la torche 28 une bande de matière sur le bulbe 24 le long de la ligne 20c ou 21c, donc suivant une trajectoire perpendiculaire au plan de la figure 6. On déplacera la torche 28 le long de la trajectoire 30 en direction du point 30a pour déposer une autre bande de matière adjacente à la première avec un chevauchement partiel, et ainsi de suite jusqu'à l'autre extrémité 21c ou 20c du brut 2a. On déposera de la même façon des couches de matière successives en décalant progressivement la trajectoire 30 suivant la direction 31, la course de la torche 28 devenant de plus en plus courte de part et d'autre du point 30a, la torche s'immobilisant en final sur ce point 30a pour déposer les dernières bandes de matière le long de la ligne 23.

Du fait que la matière à déposer ait une épaisseur fortement variable : mince au voisinage des lignes 20c et 21c, et épaisse vers la ligne 25, on inclinera la torche plasma 28 d'un angle β de façon à orienter le flux de matière 29 vers l'arrière de l'aube, ce qui permet de déposer moins de matière dans la partie 29a du flux 29 à l'arrière de l'aube, et par compensation de déposer plus de matière dans la partie 29b du flux à l'avant de l'aube. On dépose ainsi en une seule passe un ruban de matière épais sur un bord et allant en s'amincissant vers l'autre bord. Le façonnage du brut 2a est effectué sur une machine classique à commande numérique six axes. La mise au point du procédé au cas par cas selon la forme à obtenir relève des expérimentations normales en atelier à la portée de l'homme du métier.

On se reportera à la figure 7. La suite du procédé est semblable à l'exemple précédent, soit : l'ensemble préforme 11 + brut 2a sont disposés dans un moule 14 dont les parois 15 sont à la forme de la pale 1 finie, alors qu'une cavité 16 entoure le brut 2a avec un jeu suffisant, les limites de cette cavité 16 et des parois 15 étant en regard des lignes 20c et 21c. L'espace laissé entre le brut 2a et les parois 17 de la cavité 16 est comblé par injection d'élastomère. La pale 1 est ensuite façonnée par injection et polymérisation de résine suivant le procédé RTM (résin transfer molding). L'aube est ensuite démoulée et on usine le bord d'attaque 2 dans le brut 2a.

La torche plasma 28 est un moyen avantageux permettant de réaliser rapidement le profil aérodynamique du bord d'attaque 2 de l'aube notamment lorsque cette aube est de grandes dimensions. Le dépôt de matière à la flamme ou à l'arc électrique ainsi que le soudage d'une pièce usinée séparément peuvent aussi être envisagés, surtout lorsque l'aube est de petites dimensions.

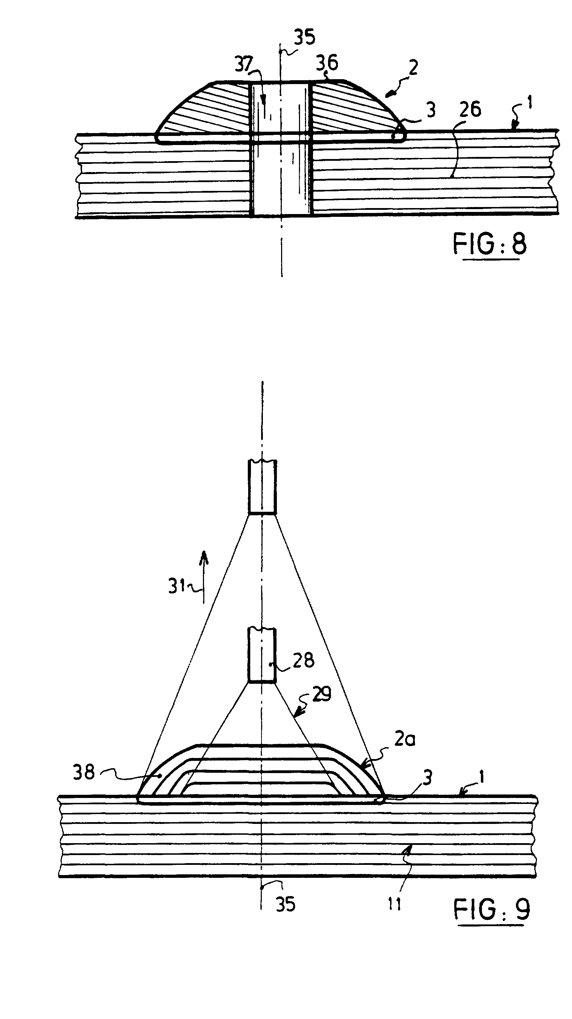

On se reportera maintenant à la figure 8. La partie 2 est dans cet exemple un bossage sur la paroi 1 d'un carter ou d'un couvercle dont les fibres de renfort sont disposées en nappes de tissu parallèlement à la paroi. Le bossage 8 fait saillie sur la paroi 1 et est accroché à cette paroi 1 par la couche de transition 3 d'une surface sensiblement identique à celle de la base du bossage 2. Ce bossage 2 a une forme générale circulaire d'axe 35, une surface usinée 36 plane et parallèle à la paroi 1 et un alésage usiné 37 d'axe 35 traversant le bossage 2 et la paroi 1.

On se reportera maintenant à la figure 9. La préforme 11 de la paroi 1 étant réalisée, on dispose la torche plasma 28 dans l'axe 35 du bossage à réaliser, et on façonne successivement la couche de transition 3 et le brut 2a du bossage 2 par projection d'un flux conique de gouttelettes de matière en fusion 29 sur la préforme 11. On effectue plusieurs projections en éloignant chaque fois la torche 28 de la paroi préforme 11 selon le vecteur 31 parallèle à l'axe géométrique 35, afin de superposer des couches de matières 38 de plus en plus larges et constituer ainsi un brut du bossage 2a.

Dans le cas de bossages de forme étendue, le mouvement 31 de la torche 28 est combiné à un mouvement orbital parallèlement à la paroi 1.

La pièce est ensuite façonnée comme dans les exemples précédents.

D'une façon générale, dans le cas de pièces de grandes dimensions, on réalisera avantageusement la préforme 11 avec de la fibre 6 revêtue d'une très mince couche de résine, la préforme étant ensuite mise une première fois dans le moule 14 et soumise à une polymérisation à sa forme définitive. Ceci permet de rigidifier suffisamment la préforme 11 et de faciliter le façonnage de la couche de transition 3 et du brut 2a tout en conservant les avantages de la préforme sèche précédemment décrits.

## Revendications

1. Pièce hybride comportant une première partie (1) ou partie tendre composée de fibres (6a) noyées dans une matrice (7) de résine organique, et au moins une seconde partie (2) ou partie dure en matériau du groupe métal, alliage métallique ou éramique, cette pièce hybride comportant entre la partie tendre (1) et la partie dure (2) une couche de transition (3) séparant entièrement la partie tendre (1) de le partie dure (2), la couche de transition (3) étant elle-même en matériau composite constituée de fibres de renfort (6b) et d'une matrice en matériau soudable avec la partie dure (2), **caractérisée en ce que** la partie dure (2) a au moins en un endroit une dimension d suivant une direction quelconque au moins égale à 8 mm et **en ce que** les fibres de renfort (6b) sont les prolongements des fibres de renfort (6a) de la partie tendre (1), lesdites fibres de renfort (6a, 6b) référencées (6) coupant au moins à sa périphérie la surface (4) entre la partie tendre (1) et la couche de transition (3).

2. Pièce hybride selon la revendication 1 **caractérisée en ce que** la matrice de la couche de transition (3) est en matériau du groupe métal, alliage métallique ou céramique.

3. Pièce hybride selon la revendication 1 ou 2, **caractérisée en ce que** les fibres de renfort (6b) composant la couche de transition (3) sont enrobées par la matrice de ladite couche de transition (3).

4. Pièce hybride selon l'une des revendications 1 à 3, **caractérisée en ce que** les fibres (6) sont celles de nappes de tissus occupant le volume de la couche de transition (3) ainsi que le volume de la partie tendre (1) de la pièce au moins dans le voisinage de ladite couche de transition.

5. Pièce hybride selon l'une des revendications 1 à 3, **caractérisée en ce que** les fibres (6) sont celles d'un monotissu occupant le volume de la couche de transition (3) ainsi que le volume de la partie tendre (1) de la pièce au moins dans le voisinage de ladite couche de transition.

6. Pièce hybride selon l'une quelconque des revendications 1 à 5, **caractérisée en ce que** les fibres de renfort (6) traversent la surface (4) entre la première partie (1) et la couche de transition (3) avec un angle d'incidence compris entre 15° et 75°, afin de renforcer la liaison entre la couche de transition et la première partie.

7. Pièce hybride selon l'une quelconque des revendications 1 à 6, **caractérisée en ce qu'**elle comporte des fibres de renfort (6) formant des coudes (6b) dans la couche de transition (3) afin de renforcer la liaison entre la couche de transition et la première partie.

8. Pièce hybride selon l'une quelconque des revendications 1 à 7, **caractérisée en ce qu'**elle constitue une aube de turbomachine dont la première partie (1) est la pale et la seconde partie (2) le bord d'attaque.

9. Pièce hybride selon la revendication 8, **caractérisée en ce que** la préforme (11) est constituée de nappes de tissus 26 disposées parallèlement à la surface moyenne (22) de l'aube dont un bord débouche dans la couche de transition (3).

10. Pièce hybride conforme à la revendication 8 ou 9, **caractérisée en ce que** le bord d'attaque (2) a une épaisseur 1 en direction de l'avant de l'aube au moins égale à 20 mm.

11. Pièce hybride conforme à l'une quelconque des revendications 1 à 7, **caractérisée en ce que** la partie dure (2) est une zone de fixation.

12. Pièce hybride conforme à l'une quelconque des revendications 1 à 7, **caractérisé en ce que** la partie dure (2) est un bouclier thermique en céramique.

13. Procédé de réalisation de pièces hybrides à haut rapport résistance sur masse, lesdites pièces comportant une première partie (1) ou partie tendre en matériau composite fibre-résine organique et au moins une seconde partie (2) ou partie dure en matériau du groupe métal, alliage métallique et céramique, ledit procédé comportant notamment les opérations suivantes :
a) réalisation d'une préforme (11) de fibres (6)
b) réalisation de la couche de transition (3) sur la préforme (11) sèche en regard de la future partie dure (2) par projection de matériau en fusion soudable avec celui de ladite partie dure (2) à l'aide d'une torche plasma (28),
c) façonnage du brut (2a) de la partie dure (2) à partir de la couche de transition (3) ainsi obtenue, par dépôt du matériau en fusion de la partie dure (2),
d) introduction de l'ensemble préforme (11) + couche de transition (3) + brut (2a) dans un moule (14),
e) injection de résine, polymérisation et démoulage,
f) usinage-finition de la partie dure (2).

14. Procédé selon la revendication 13, **caractérisé en ce que** le moule (14) comporte une cavité (16) entourant le brut (2a) de la partie dure (2), et **en ce qu'**un élastomère est injecté entre ledit brut (2a) et les parois (17) de ladite cavité (16), afin de faire obstacle à la résine.

15. Procédé selon la revendication 13 ou 14, **caractérisé en ce que** la préforme (11) est constituée de nappes de tissu (26) dont au moins un bord affleure à la surface (5b) en regard de la seconde partie (2) afin de renforcer la liaison entre la couche de transition (3) et la première partie (1).

16. Procédé selon l'une quelconque des revendications 13 à 15, **caractérisé en ce que** la préforme (11) est en monotissu et **en ce que** les fils de chaîne (6) affleurent à la surface (5b) en regard de la seconde partie (2), afin de constituer des coudes (6b) dans la couche de transition (3).

17. Procédé selon l'une quelconque des revendications 13 à 16 **caractérisé en ce que** la préforme (il) est réalisée à partir de fibres (6) enduites d'une mince couche de résine, et **en ce qu'**elle subit une première polymérisation à sa forme définitive avant la réalisation de la couche de transition (3) afin de la rigidifier.

## Patentansprüche

1. Hybrid-Werkstück mit einem ersten Bereich (1) oder weichen Bereich, der aus Fasern (6a) besteht, die in eine Matrix (7) aus organischem Harz eingesenkt sind, und mit mindestens einem zweiten Bereich (2) oder hartem Bereich aus einem Werkstoff der Gruppe der Metalle, Metallegierungen oder Keramikstoffe, wobei dieses Hybrid-Werkstück zwischen dem weichen Bereich (1) und dem harten Bereich (2) eine Übergangsschicht (3) enthält, die den weichen Bereich (1) und den harten Bereich (2) vollständig voneinander trennt, wobei die Übergangsschicht (3) ihrerseits aus Verbundstoff besteht, der aus Verstärkungsfasern (6b) und einer Matrix aus einem mit dem harten Bereich (2) verschweißbaren Material gebildet wird,
**dadurch gekennzeichnet,**
**dass** der harte Bereich (2) mindestens an einer Stelle in einer beliebigen Richtung eine Abmessung d hat, die mindestens 8 mm beträgt, und dass die Verstärkungsfasern (6b) Verlängerungen der Verstärkungsfasern (6a) des weichen Bereichs (1) sind, wobei die genannten Verstärkungsfasern (6a, 6b), die insgesamt die Bezugszahl (6) haben, die Fläche (4) zwischen dem weichen Bereich (1) und der Übergangsschicht (3) zumindest an ihrem Außenumfang schneiden.

2. Hybrid-Werkstück nach Anspruch 1,
**dadurch gekennzeichnet,**
**dass** die Matrix der Übergangsschicht (3) aus einem Werkstoff der Gruppe der Metalle, Metallegierungen oder Keramikstoffe besteht.

3. Hybrid-Werkstück nach Anspruch 1 oder 2,
**dadurch gekennzeichnet,**
**dass** die Verstärkungsfasern (6b), die Bestandteil der Übergangsschicht (3) sind, von der Matrix dieser Übergangsschicht (3) umhüllt werden.

4. Hybrid-Werkstück nach einem der Ansprüche 1 bis 3,
**dadurch gekennzeichnet,**
**dass** die Fasern (6) Fasern von Gewebebahnen sind, die das Volumen der Übergangsschicht (3) gänzlich und das Volumen des weichen Bereichs (1) des Werkstücks zumindest in der Nähe dieser Übergangsschicht ausfüllen.

5. Hybrid-Werkstück nach einem der Ansprüche 1 bis 3,
**dadurch gekennzeichnet,**
**dass** die Fasern (6) Fasern eines Einfachgewebes sind, die das Volumen der Übergangsschicht (3) gänzlich und das Volumen des weichen Bereichs (1) des Werkstücks zumindest in der Nähe dieser Übergangsschicht ausfüllen.

6. Hybrid-Werkstück nach einem der Ansprüche 1 bis 5,
**dadurch gekennzeichnet,**
**dass** die Verstärkungsfasern (6) die Fläche (4) zwischen dem weichen Bereich (1) und der Übergangsschicht (3) mit einem Einfallwinkel von 15° bis 75° durchqueren, um die Bindung zwischen der Übergangsschicht und dem ersten Bereich zu verstärken.

7. Hybrid-Werkstück nach einem der Ansprüche 1 bis 6,
**dadurch gekennzeichnet,**
**dass** es Verstärkungsfasern (6) aufweist, die in der Übergangsschicht (3) Biegungen (6b) bilden, um die Bindung zwischen der Übergangsschicht und dem ersten Bereich zu verstärken.

8. Hybrid-Werkstück nach einem der Ansprüche 1 bis 7,
**dadurch gekennzeichnet,**
**dass** es eine Turbotriebwerksschaufel darstellt, deren erster Bereich (1) das Schaufelblatt bildet und deren zweiter Bereich (2) die Vorderkante bildet.

9. Hybrid-Werkstück nach Anspruch 8,
**dadurch gekennzeichnet,**
**dass** der Vorformling (11) aus Gewebebahnen (26) besteht, die parallel zur Mittelfläche (22) der Schaufel angeordnet sind, deren einer Rand in der Übergangsschicht (3) mündet.

10. Hybrid-Werkstück nach Anspruch 8 oder 9,
**dadurch gekennzeichnet,**
**dass** die Vorderkante (2) in Richtung zur Vorderseite der Schaufel eine Dicke 1 von mindestens 20 mm hat.

11. Hybrid-Werkstück nach einem der Ansprüche 1 bis 7,
**dadurch gekennzeichnet,**
**dass** der harte Bereich (2) ein Befestigungsbereich ist.

12. Hybrid-Werkstück nach einem der Ansprüche 1 bis 7,
**dadurch gekennzeichnet,**
**dass** der harte Bereich (2) ein Wärmeschild aus Keramik ist.

13. Verfahren zur Herstellung von Hybrid-Werkstücken mit einem großen Festigkeit-Masse-Verhältnis, wobei diese Werkstücke aus einem ersten Bereich (1) oder weichen Bereich aus einem Verbundstoff aus Fasern und organischem Harz und mindestens einem zweiten Bereich (2) oder harten Bereich aus einem Werkstoff der Gruppe der Metalle, Metallegierungen und Keramikstoffe besteht, wobei dieses Verfahren insbesondere die folgenden Arbeitsschritte enthält:
a) Herstellung eines Vorformlings (11) aus Fasern (6),
b) Herstellung der Übergangsschicht (3) auf dem trockenen Vorformling (11) gegenüber dem zukünftigen harten Bereich (2) durch Spritzen eines schmelzflüssigen Werkstoffs, der mit dem dieses harten Bereichs (2) mittels eines Plasmabrenners (28) verschweißbar ist,
c) Formen des Rohlings (2a) des harten Bereichs (2) auf der solcherart hergestellten Übergangsschicht (3) durch Auftragen des schmelzflüssigen Werkstoffs des harten Bereichs (2),
d) Einführen der Gesamtanordnung Vorformling (11) + Übergangsschicht (3) + Rohling (2a) in eine Form (14),
e) Einspritzen von Harz, Polymerisation und Ausformen,
f) Endbearbeitung des harten Bereichs (2).

14. Verfahren nach Anspruch 13,
**dadurch gekennzeichnet,**
**dass** die Form (14) einen Hohlraum (16) aufweist, der den Rohling (2a) des harten Bereichs (2) umschließt, und dass zwischen diesen Rohling (2a) und die Wände (17) dieses Hohlraums (16) ein Elastomer eingespritzt wird, um ein Hemmnis für das Harz zu bilden.

15. Verfahren nach Anspruch 13 oder 14,
**dadurch gekennzeichnet,**
**dass** der Vorformling (11) aus Gewebebahnen (26) besteht, von denen mindestens ein Rand mit der Oberfläche (5b) fluchtet, die dem harten Bereich (2) gegenüber liegt, um die Bindung zwischen der Übergangsschicht (3) und dem ersten Bereich (1) zu verstärken.

16. Verfahren nach einem der Ansprüche 13 bis 15,
**dadurch gekennzeichnet,**
**dass** der Vorformling (11) aus Einfachgewebe besteht und dass die Kettfäden (6) mit der Oberfläche (5b), die dem harten Bereich (2) gegenüber liegt, fluchten, um in der Übergangsschicht (3) Biegungen (6b) zu bilden.

17. Verfahren nach einem der Ansprüche 13 bis 16,
**dadurch gekennzeichnet,**
**dass** der Vorformling (11) aus Fasern (6) hergestellt wird, die mit einer dünnen Harzschicht überzogen sind, und dass er vor der Bildung der Übergangsschicht (3) einer ersten Polymerisation in seine Endform unterzogen wird, um ihn zu versteifen.

## Claims

1. Hybrid object comprising a first part (1) or soft part, made up of fibres (6a) embedded in a matrix (7) of organic resin, and at least a second part (2), or hard part, made from material from the metal, metal alloy or ceramic group, this hybrid object comprising, between the soft part (1) and the hard part (2), a transition layer (3) completely separating the soft part (1) from the hard part (2), the transition layer (3) being itself made of a composite material made up of reinforcing fibres (6b) and of a matrix made of a material that can be welded to the hard part (2), **characterized in that** the hard part (2) at least at one point has a dimension d in any direction but is at least equal to 8 mm and **in that** the reinforcing fibres (6b) are continuations of the reinforcing fibres (6a) of the soft part (1), the said reinforcing fibres (6a, 6b) referenced (6) at least at its periphery intersecting the surface (4) between the soft part (1) and the transition layer (3).

2. Hybrid object according to Claim 1, **characterized in that** the matrix of the transition layer (3) is made of a material from the metal, metal alloy or ceramic group.

3. Hybrid object according to Claim 1 or 2, **characterized in that** the reinforcing fibres (6b) making up the transition layer (3) are coated by the matrix of the said transition layer (3).

4. Hybrid object according to one of Claims 1 to 3, **characterized in that** the fibres (6) are those of webs of wovens occupying the volume of the transition layer (3) and the volume of the soft part (1) of the object at least in the vicinity of the said transition layer.

5. Hybrid object according to one of Claims 1 to 3, **characterized in that** the fibres (6) are those of a monowoven occupying the volume of the transition layer (3) and the volume of the soft part (1) of the object at least in the vicinity of the said transition layer.

6. Hybrid object according to any one of Claims 1 to 5, **characterized in that** the reinforcing fibres (6) pass through the surface (4) between the first part (1) and the transition layer (3) at an angle of incidence of between 15° and 75° so as to strengthen the bond between the transition layer and the first part.

7. Hybrid object according to any one of Claims 1 to 6, **characterized in that** it comprises reinforcing fibres (6) forming elbows (6b) in the transition layer (3) so as to strengthen the bond between the transition layer and the first part.

8. Hybrid object according to any one of Claims 1 to 7, **characterized in that** it constitutes a turbomachine blade, the first part (1) of which is the aerofoil and the second part (2) of which is the leading edge.

9. Hybrid object according to Claim 8, **characterized in that** the preform (11) consists of webs of wovens (26) arranged parallel to the average surface (22) of the blade, one edge of which emerges into the transition layer (3).

10. Hybrid object according to Claim 8 or 9, **characterized in that** the leading edge (2) has a thickness (1) in the direction of the front of the blade but is at least equal to 20 mm.

11. Hybrid object according to any one of Claims 1 to 7, **characterized in that** the hard part (2) is a fixing zone.

12. Hybrid object according to any one of Claims 1 to 7, **characterized in that** the hard part (2) is a ceramic heat shield.

13. Method for producing hybrid objects with a high strength-to-mass ratio, the said objects comprising a first part (1), or soft part, made of fibre-organic resin composite and at least one second part (2), or hard part, made from a material of the metal, metal alloy and ceramic group, the said method in particular comprising the following operations:
a) producing a preform (11) of fibres (6)
b) producing the transition layer (3) on the dry preform (11) facing the future hard part (2) by spraying molten material that can be welded to that of the said hard part (2) using a plasma torch (28),
c) fashioning the raw version (2a) of the hard part (2) from the transition layer (3) thus obtained, by depositing the molten material of the hard part (2),
d) placing the preform (11) + transition layer (3) + raw version (2a) assembly in a mould (14),
e) injecting resin, polymerizing and releasing from the mould,
f) finish-machining the hard part (2).

14. Method according to Claim 13, **characterized in that** the mould (14) has a cavity (16) surrounding the raw version (2a) of the hard part (2), and **in that** an elastomer is injected between the said raw version (2a) and the walls (17) of the said cavity (16) so as to act as an obstacle to the resin.

15. Method according to Claim 13 or 14, **characterized in that** the preform (11) consists of webs of wovens (26) at least one edge of which lies flush with the surface (5b) facing the second part (2) so as to strengthen the bond between the transition layer (3) and the first part (1).

16. Method according to any one of Claims 13 to 15, **characterized in that** the preform (11) is made of monowovens and **in that** the warp filaments (6) lie flush at the surface (5b) facing the second part (2) so as to form elbows (6b) in the transition layer (3).

17. Method according to any one of Claims 13 to 16, **characterized in that** the preform (11) is made from fibres (6) coated with a thin layer of resin, and **in that** it undergoes a first polymerization into its definitive shape before the transition layer (3) is produced so as to make it more rigid.
